# EUROPÄISCHE PATENTANMELDUNG

(11) **EP 4 169 621 A1**
(43) Veröffentlichungstag der Anmeldung: **26.04.2023**
(21) Anmeldenummer: 22199446.0
(22) Anmeldetag: 03.10.2022
(51) Int. Cl.: B05B 1/28, B05B 12/12, B05B 12/18, B05B 13/04, B08B 1/00, B08B 3/00, B64C 39/02

(54) **PROPELLER-UNTERSTÜTZTE VORRICHTUNG FÜR DIE REINIGUNG, BESCHICHTUNG, VERSIEGELUNG UND/ODER LACKIERUNG VON GEBÄUDEFASSADEN, GLASFASSADEN, DÄCHERN, INNENWÄNDEN VON TUNNELN UND DERGLEICHEN**

(30) Priorität: 19.10.2021 DE 102021005201
(71) Anmelder: Rockenschaub, Thomas, 4273 Unterweißenbach (AT)
(72) Erfinder: Rockenschaub, Thomas, 4273 Unterweißenbach (AT)
(74) Vertreter: Einsiedler, Johannes

(57) **Zusammenfassung**

Die vorliegende Erfindung betrifft eine Propeller-unterstützte Vorrichtung (1) für die Reinigung, Beschichtung, Versiegelung und/oder Lackierung von Gebäudefassaden, Glasfassaden, Dächern, Innenwänden von Tunneln und dergleichen, wenigstens umfassend: einen Grundkörper (11) mit wenigstens einem, mit dem Grundkörper (11) verbundenen, Propeller (111); wenigstens eine, über einen Schwenkarm (12) mittels eines ersten Schwenkgelenks (113) schwenkbar mit dem Grundkörper (11) verbundenen, Sprüheinheit (13); wenigstens ein am Grundkörper (11), am Schwenkarm (12) und/oder an der Sprüheinheit (13) angeordnetes Mittel (16; 134) zur Distanzbestimmung und wenigstens eine Basisstation (3), welche über einen Zufuhrschlauch (2) mit dem Grundkörper (11) verbunden ist. Sie ermöglicht es vorteilhaft exponierte, verwinkelte und allgemein unzugängliche Stellen an Fassaden, Dächern und dergleichen für eine Bearbeitung zu erreichen und gewährleistet qualitativ hochwertige, reproduzierbare Arbeitsergebnisse. Die erfindungsgemäße Vorrichtung (1) spart dabei vorteilhaft Arbeitszeit und Kosten ein und erhöht zudem die Arbeitssicherheit, da auf Arbeiten durch Menschen in größeren Höhen verzichtet werden kann.

## Beschreibung

Die vorliegende Erfindung betrifft eine Propeller-unterstützte Vorrichtung für die Reinigung, Beschichtung, Versiegelung und/oder Lackierung von Gebäudefassaden, Glasfassaden, Dächern, Innenwänden von Tunneln und dergleichen. Unter "Lackierung" bzw. "lackieren" soll im Rahmen der vorliegenden Erfindung das Aufbringen sowohl von Lacken als auch von Farben und Lasuren auf eine Oberfläche verstanden werden.

Handwerkliche Arbeiten an exponierten, unzugänglichen Punkten von Hochhäusern, Kirchen, Brücken, Tunneln, diversen Dächern etc. stellen sich oftmals problematisch dar. Zur Reinigung und Veredelung, beispielsweise durch Auftragen einer Versiegelung bzw. Beschichtung, sowie zum Lackieren von Oberflächen an hohen, unzugänglichen Punkten, insbesondere an Fassaden der genannten Bauwerke, werden gewöhnlich Gerüste aufgebaut oder Krane bzw. Hebebühnen verwendet, um dem jeweiligen Handwerker eine geeignete Arbeitsposition zu ermöglichen. Ein derartiges Vorgehen ist nicht nur zeitaufwändig, sondern auch teuer. Zudem müssen dadurch, insbesondere bei innerstädtischen Bauwerken, oftmals zeitweise Zufahrtswege gesperrt werden, was u.a. einen großen Organisationsaufwand (mit Polizei, Stadtverwaltung, etc.) bedeuten kann. Schließlich birgt jegliche Arbeit in großer Höhe in sich selbst eine Gefahr für Unfälle, so dass aus Erwägungen der Arbeitssicherheit beispielsweise auch stets zwei Personen an einem Gebäude arbeiten müssen, um gegebenenfalls einander Erste Hilfe leisten zu können.

Um die Notwendigkeit zu vermeiden, selbst in großer Höhe arbeiten zu müssen, sind aus dem Stand der Technik Vorrichtung zur Gebäudereinigung und -veredelung bekannt geworden, welche über Teleskopeinrichtungen verfügen, so dass der jeweilige Benutzer vorteilhaft vom Boden aus, beispielsweise Reinigungsarbeiten und/oder Lackierungsarbeiten in Höhen bis zu 15 - 20 m, allein durchführen kann. Derartige Vorrichtung sind jedoch in ihrer maximal erreichbaren Höhe auf eben jene, zuvor genannten Bereiche beschränkt. Zudem können damit konkave Stellen der jeweiligen Fassade, sowie Dächer und die darauf angeordneten Bauteile wie beispielsweise Photovoltaik-Anlagen, Sonnenkollektoren, etc., die ebenfalls einer Bearbeitung (Reinigung, Beschichtung, Lackierung, ...) unterzogen werden sollen, nur schwer bis gar nicht erreicht werden.

Für Arbeiten in noch größeren Höhen und an besonders unzugänglichen Stellen an Fassaden und auf Dächern, wie insbesondere an konkaven Stellen, Fassadenaußenecken, Dachgiebeln, Aufbauten auf Dächern, etc., werden in jüngerer Zeit Drohnen, also unbemannte Flugobjekte, eingesetzt, welche mit Sprühdüsen ausgestattet sind, über die sie Flüssigkeiten während des Flugs auf eine zu behandelnde Oberfläche aufbringen können. So ist beispielsweise ein Luftfahrzeug für Malerarbeiten im Innen- und Außenbereich bekannt geworden, bestehend aus einem unbemannten Luftfahrzeug mit einer Sprüheinheit für Farbe, welches über eine Schlauchverbindung mit einer Basisstation verbunden ist, und über die die Sprüheinheit aus der Basisstation mit Strom und Sprühmaterial versorgt wird. Das dort beschriebene Luftfahrzeug verfügt zudem über ein Kontrollsystem sowie wenigstens einen Sensor, mit Hilfe dessen das Luftfahrzeug gesteuert und insbesondere dessen Sprüheinheit bezüglich einer zu besprühenden Oberfläche positioniert werden kann.

Hiervon ausgehend soll mit der vorliegenden Erfindung eine Vorrichtung für die Reinigung, Beschichtung, Versiegelung und/oder Lackierung von Gebäudefassaden, Glasfassaden, Dächern, Innenwänden von Tunneln und der gleichen bereitgestellt werden, welche es ermöglicht, gerade besonders unzugängliche Stellen an Fassaden und auf Dächern, wie insbesondere konkave Stellen, Fassadenaußenecken, Dachgiebel, Aufbauten auf Dächern, etc., zur Reinigung und/oder Veredelung (Beschichtung, Versiegelung, Lackierung, etc.) erreichen zu können, ohne dass der jeweilige Benutzer selbst den Boden verlassen muss. Die vorliegende Erfindung zielt dabei vornehmlich auf ein qualitativ hochwertiges, reproduzierbares Ergebnis der mit der erfindungsgemäßen Vorrichtung behandelten Oberfläche ab.

Diese Aufgabe wird durch eine Propeller-gestützte Vorrichtung mit den Merkmalen des unabhängigen Patentanspruchs 1 gelöst.

Die erfindungsgemäße Vorrichtung umfasst wenigstens einen Grundkörper mit wenigstens einem, mit dem Grundkörper verbundenen, Propeller; wenigstens eine, über einen Schwenkarm mittels eines ersten Schwenkgelenks schwenkbar mit dem Grundkörper verbundenen, Sprüheinheit; wenigstens ein am Grundkörper, am Schwenkarm und/oder an der Sprüheinheit angeordnetes Mittel zur Distanzbestimmung; und wenigstens eine Basisstation, welche über einen Zufuhrschlauch mit dem Grundkörper verbunden ist.

Die erfindungsgemäße Vorrichtung ermöglicht es vorteilhaft, die zu bearbeitende Oberfläche selbstständig zu analysieren, die Bearbeitung, insbesondere die Reinigung, Beschichtung, Versiegelung und/oder Lackierung besagter Oberfläche auf deren Beschaffenheit anzupassen und während der Bearbeitung die Position der Vorrichtung, vorzugsweise deren Schwenkarm und/oder deren Sprüheinheit, in Bezug auf die Oberfläche derart einzustellen, dass stets ein qualitativ optimales Arbeitsergebnis erzielt wird. Der wenigstens eine, bevorzugt mehrere, mit dem Grundkörper verbundene Propeller ermöglicht es vorteilhaft, den Grundkörper samt Schwenkarm, Sprüheinheit, Zufuhrschlauch und etwaigem weiteren Zubehör, vom Boden anzuheben, in der Höhe aufund absteigen zu lassen und in der Schwebe zu halten.

Weitere vorteilhafte Ausgestaltungen und Weiterbildungen, welche einzeln oder in Kombination miteinander einsetzbar sind, sind Gegenstand der abhängigen Ansprüche.

Besonders bevorzugt ist dabei eine Ausgestaltung der Erfindung, bei der an der Sprüheinheit wenigstens ein weiterer Propeller angeordnet ist, wobei der Propeller bevorzugt schwenkbar an der Sprüheinheit angeordnet ist.

Der wenigstens eine, zusätzliche Propeller an der Sprüheinheit ermöglicht es vorteilhaft, Kräfte, die auf den Grundkörper, den Schwenkarm und/oder die Sprüheinheit einwirken und insbesondere während der Abgabe von Material über die Sprüheinheit entstehen, auszugleichen und dadurch insbesondere während eines Sprühvorgangs einen stabilen Flug des Grundkörpers samt Schwenkarm und Sprüheinheit zu gewährleisten. Dazu ist der wenigstens eine Propeller bevorzugt schwenkbar, insbesondere über eine kardanische Aufhängung schwenkbar, mit der Sprüheinheit wirkverbunden, wodurch der Propeller vorteilhaft jeweils so gedreht werden kann, dass er einen optimalen Ausgleichsschub zu den durch die Abgabe von Material über die Sprüheinheit erzeugten Kräften erzeugt. Ein stabileres Flugverhalten führt wiederum vorteilhaft zu einer höheren Präzision der Strahlführung der Sprüheinheit und somit zu einer besseren Reinigungs- und/oder Beschichtungs- bzw. Lackierungsqualität. Darüber hinaus ermöglicht es der wenigstens eine, an der Sprüheinheit angeordnete Propeller, vorteilhaft auch Kräfte, die durch eine Schwerpunktsverlagerung des Systems aus Grundkörper, Schwenkarm und Sprüheinheit, während bzw. nach einer Schwenkbewegung des Schwenkarms um einen Schwenkwinkel α auftreten, sowie etwaige Gegenkräfte, welche durch den aus der Sprüheinheit ausgestoßenen Sprühstrahl erzeugt werden, auszugleichen und den Flug zu stabilisieren.

In einer weiteren bevorzugten Ausgestaltung hat sich bewährt, wenn die Propeller als Impeller und/oder Doppelpropeller ausgestaltet sind. Impeller, also Propeller mit ring- oder röhrenförmiger Ummantelung, weisen dabei vorteilhaft im Vergleich zu nicht-ummantelten Propellern eine höheren Propellerwirkungsgrad auf. Ein Doppelpropeller, bei welchem sich zwei direkt hintereinander angeordnete Propeller vorzugsweise in gegenläufige Richtung drehen, ermöglicht vorteilhaft einen Drehimpulsausgleich und eine Schuberhöhung.

In einer bevorzugten Ausgestaltung der Erfindung hat es sich zudem bewährt, wenn die Sprüheinheit über wenigstens ein zweites Schwenkgelenk schwenkbar mit dem Schwenkarm verbunden ist. Das zweite Schwenkgelenk ermöglicht es vorteilhaft, insbesondere im Zusammenspiel mit dem ersten Schwenkgelenk am Grundkörper, durch eine Änderung des Schwenkwinkels β der Sprüheinheit, den Winkel des Sprühstrahls zum besprühten Objekt zu verändern oder aber während einer Bewegung des Grundkörpers und/oder des Schwenkarms stets bei 90° zu halten. Mit anderen Worten kann durch Vorsehen eines zweiten Schwenkgelenks vorteilhaft, der Winkel, mit der ein Material- bzw. Sprühstrahl auf ein Objekt, insbesondere eine Gebäudefassade, auftrifft, unabhängig von der aktuellen Bewegung des Grundkörpers und/oder des Schwenkarms eingestellt und/oder konstant gehalten werden.

In einer weiteren Ausgestaltung ist es bevorzugt, wenn die Sprüheinheit wenigstens ein Mittel zur Distanzeinstellung bezüglich der Gebäudefassade, Glasfassade, des Daches, der Innenwand eines Tunnels und dergleichen umfasst, wobei das Mittel zur Distanzeinstellung vorzugsweise ein Mittel zur Distanzbestimmung und/oder wenigstens ein Gleitelement zur Wechselwirkung mit der Gebäudefassade, Glasfassade, dem Dach, der Innenwand eines Tunnels und dergleichen umfasst. Ein Mittel zur Distanzeinstellung, welches insbesondere als ein mittels Spindelhubmotor bzw. -motoren aus- und einfahrbarer Teleskoparm ausgestaltet sein kann, ermöglicht vorteilhaft die mechanische Distanzeinstellung und Kontrolle zwischen der Sprüheinheit und der zu bearbeitenden Oberfläche, resp. Gebäudefassade. Ein Gleitelement, welches vorzugsweise durch eine, am, dem der Sprüheinheit gegenüberliegenden, Ende des Mittels zur Distanzeinstellung angeordnete Rolle und/oder Walze mit 360°-Drehmöglichkeit ausgestaltet sein kann, kann vorteilhaft einen beschädigungsfreien Kontakt zwischen dem Mittel zur Distanzeinstellung und der zu bearbeitenden Oberfläche, auch während einer Bewegung der Vorrichtung entlang besagter Oberfläche, gewährleisten.

Darüber hinaus hat sich eine Ausgestaltung der Erfindung bewährt, bei der am Schwenkarm wenigstens ein zweiter Motor angeordnet ist, der eingerichtet ist, die Sprüheinheit gegenüber dem Schwenkarm zu schwenken. Ein am Schwenkarm angeordneter zweiter Motor erlaubt vorteilhaft eine exakte automatische Einstellung des Schwenkwinkels β der Sprüheinheit.

In einer weiteren bevorzugten Ausgestaltung der Erfindung, kann der Zufuhrschlauch als ein Schlauchverbund ausgestaltet sein, wobei im Inneren einer Umhüllung wenigstens ein erster Materialzufuhrschlauch, insbesondere zur Zuführung einer Flüssigkeit, wie beispielswiese Wasser, Lacke und/oder andere flüssige Veredelungsmittel; wenigstens ein zweiter Materialzufuhrschlauch, insbesondere zur Zuführung eines Gases, wie beispielsweise Druckluft, und wenigstens ein Kabel zur Stromversorgung des Grundkörpers angeordnet sein können. Ein als Schlauchverbund ausgestalteter Zufuhrschlauch erlaubt vorteilhaft die Versorgung des Grundkörpers bzw. der Sprüheinheit mit verschiedenen Materialien und Energie, wobei die Umhüllung der Einzelleitungen einerseits Schutz vor Beschädigung bietet und andererseits durch die Zusammenfassung der verschiedenen Leitungen zu einem einzigen Gebilde deren Handhabung während eines Fluges erleichtert. Der Zufuhrschlauch als solcher und insbesondere der Verbund aus den Materialzufuhrschläuchen und dem Kabel kann zudem vorteilhaft während eines Fluges Zug auf den Grundkörper ausüben, welcher die Stabilisierung des Grundkörpers samt Schwenkarm und Sprüheinheit in der Luft weiter erhöhen kann. Dazu kann der Zufuhrschlauch vorzugsweise starr, über ein, an der dem Boden zugewandten Seite des Grundkörpers, insbesondere an der dem Schwenkarm gegenüberliegenden Seite des Grundkörpers angeordneten Anschlussrohr, mit dem Grundkörper verbunden sein.

Darüber hinaus ist es von Vorteil, wenn der Schwenkarm hohl ausgestaltet ist, wobei im Inneren des Schwenkarms wenigstens ein, bevorzugt zwei, Mittel zur Materialleitung verläuft oder verlaufen und welches eingerichtet ist bzw. welche eingerichtet sind, Material aus dem Zufuhrschlauch aufzunehmen und zur Sprüheinheit zu transportieren. Das oder die Mittel zur Materialleitung können dabei aus einem Metall, zum Beispiel aus Aluminium, aus Kunststoff und/oder aus einem Kohlefaserverbundmaterial gebildet sein. Ein hohl ausgestalteter Schwenkarm kann vorteilhaft über Mittel zu Materialleitung, wie Rohrleitungen oder Schläuche, sowie durch in seinem Inneren verlaufende Kabel die Versorgung der Sprüheinheit mit verschiedenen Materialien, wie Wasser, Seifenlösung, Lacken, Farben, verschiedenen andere Veredelungs- und Beschichtungsmitteln, aber auch mit Druckluft und anderen Gasen sowie mit elektrischem Strom versorgen. Besagte Leitungen und Kabel sind dabei vorteilhaft geschützt und können im Inneren des Schwenkarms dessen Bewegung folgen.

In einer weiteren bevorzugten Ausgestaltung hat es sich bewährt, wenn die Sprüheinheit wenigstens ein Aufnahmemittel zur reversiblen Aufnahme und Wirkverbindung von Zubehör, insbesondere zur Aufnahme und Wirkverbindung einer Sprühdüse, eines Lackieraufsatzes und/oder einer Rotationsbürste, umfassen. Eine derartige Sprüheinheit kann vorteilhaft, je nach konkretem Verwendungszweck, mit verschiedenen Aufsätzen, Düsentypen und anderen Werkzeugen bestückt werden. Der Anschluss des besagten Zubehörs kann dabei schnell und einfach über das wenigstens eine Aufnahmemittel erfolgen, welches insbesondere als ein Schnellverschlusssystem zur reversiblen Verbindung der genannten Zubehörtypen ausgestaltet sein kann.

Vorteilhaft ist dabei auch, wenn der der Lackieraufsatz wenigstens eine Lackierdüse, welche eingerichtet ist, fluides Material aus dem Zufuhrschlauch aufzunehmen und in Form eines Stahls und/oder eines Nebels zu versprühen; wenigstens einen Trichter, welcher die Lackierdüse umhüllt und über seine große Trichteröffnung den von der Lackierdüse erzeugten Strahl und/oder Nebel freigibt; und wenigstens eine Luftdüse umfasst, welche am Rand der großen Trichteröffnung angeordnet ist und dazu eingerichtet ist, gasförmiges Material, insbesondere Druckluft, aus dem Zufuhrschlauch aufzunehmen und nach außen abzugeben. Ein solcher Lackieraufsatz ermöglicht es vorteilhaft, Sprühmaterial, insbesondere Lacke, Farben, aber auch andere flüssige Veredelungsmittel, auch bei Seitenwind, welcher bei der Verwendung der Vorrichtung in großen Höhen auftreten kann, gezielt auf das zu behandelnde Objekt, insbesondere eine Gebäudefassade, aufzubringen.

Darüber hinaus hat sich bewährt, wenn der Lackieraufsatz ferner einen Sensor zur Distanzund Schichtdickenmessung und/oder eine Auffangeinrichtung zum Aufsammeln von überschüssigem Lack umfasst. Ein Sensor zur Distanz- und Schichtdickenmessung ermöglicht zusätzlich eine genaue Kontrolle des Bearbeitungsergebnisses vorzugsweise in Echtzeit und erlaubt vorteilhaft eine sofortige Korrektur während des Einsatzes der Vorrichtung. Eine Auffangeinrichtung zum Aufsammeln von überschüssigem Lack ermöglicht vorteilhaft die Wiederverwendung des gesammelten Materials und verhindert die Verschmutzung von, in Bezug auf die aktuelle Arbeitsposition weiter unten, also zum Boden hin, liegenden Regionen der Gebäudefassade bzw. des Bodens selbst. Die Auffangeinrichtung kann dabei insbesondere als eine Vertiefung im Trichter des Lackieraufsatz ausgebildet sein.

In einer weiteren bevorzugten Ausgestaltung der Erfindung können am Grundkörper zwei, vier, sechs oder bevorzugt acht Propeller angeordnet sein. Eine Vielzahl von am Grundkörper angeordneten Propellern ermöglicht vorteilhaft die Anhebung und Bewegung von Systemen aus Grundkörper, Schwenkarm, Sprüheinheit samt etwaigem Zubehör, sowie des Zufuhrschlauches mit einem von der jeweiligen Steighöhe abhängigen Gesamtgewicht, auf Steighöhen bis zu 100 m.

Schließlich hat sich eine Ausgestaltung der Erfindung bewährt, bei der die Basisstation wenigstens eine Mischeinrichtung umfasst, wobei die Mischeinrichtung vorzugsweise wenigstens einen Tank zur Aufnahme wenigstens eines Materials, sowie einen Rührer umfasst. Die Basisstation am Boden kann vorteilhaft zudem wenigstens eine Pumpe zum Pumpen von flüssigem Material, wenigstens eine Pumpe zum Pumpen von gasförmigem Material, insbesondere zur Erzeugung von Druckluft, sowie ein Stromaggregat und/oder eine Batterie umfassen. Eine Mischeinrichtung, wie beschrieben, kann insbesondere die schnelle Herstellung von individuell an die jeweiligen Kundenwünsche angepasste Farbund/oder Lackmischungen ermöglichen, wobei Änderungen noch während Verwendung der Vorrichtung, beispielsweise auf Basis des aktuellen Kundeneindrucks von kleineren bereits bearbeiteten Probebereichen, vorgenommen werden können.

Die erfindungsgemäße Vorrichtung ermöglicht es exponierte, verwinkelte und allgemein unzugängliche Stellen an Fassaden, Dächern und dergleichen für eine Bearbeitung zu erreichen und gewährleistet qualitativ hochwertige, reproduzierbare Arbeitsergebnisse, wobei vorteilhaft Arbeitszeit und Kosten eingespart und zudem die Arbeitssicherheit für den oder die Benutzer erhöht werden, da auf Arbeiten durch Menschen in größeren Höhen verzichtet werden kann.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig. 1: eine Ausgestaltung einer erfindungsgemäßen Propeller-gestützten Vorrichtung bei Verwendung in einer Seitenansicht;
- Fig. 2: die Ausgestaltung aus Fig. 1 in einer Draufsicht;
- Fig. 3: einen Querschnitt durch eine Ausgestaltung eines Zufuhrschlauchs;
- Fig. 4: eine erste Ausgestaltung eines Lackieraufsatzes bei Verwendung in einer Schnitt-Seitenansicht;
- Fig. 5: eine zweite Ausgestaltung eines Lackieraufsatzes mit einer Auffangeinrichtung zum Aufsammeln von überschüssigem Lack in einer Schnitt-Seitenansicht; und
- Fig. 6: eine Ausgestaltung einer Rotationsbürste bei Verwendung in einer Schnitt-Seitenansicht.

Bei der nachfolgenden Beschreibung bevorzugter Ausführungsformen der vorliegenden Erfindung bezeichnen gleiche Bezugszeichen gleiche oder vergleichbare Komponenten.

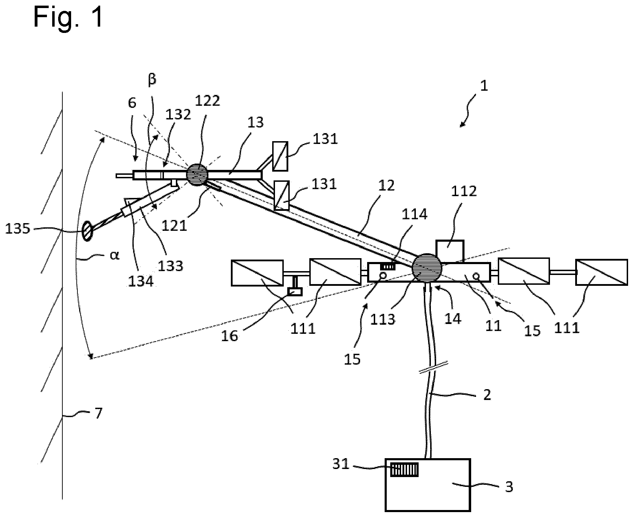

In **Fig. 1** ist eine Ausgestaltung einer erfindungsgemäßen Propeller-gestützten Vorrichtung 1 bei Verwendung in einer Seitenansicht gezeigt.

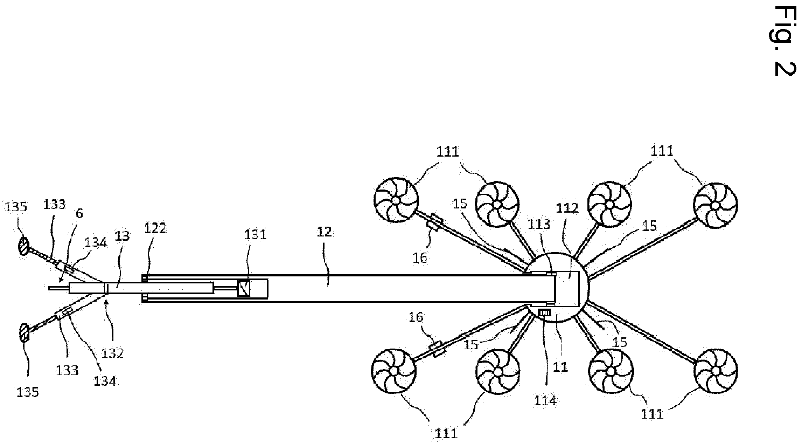

Eine erfindungsgemäße Propeller-unterstützte Vorrichtung 1 für die Reinigung, Beschichtung, Versiegelung und/oder Lackierung von Gebäudefassaden 7, Glasfassaden, Dächern, Innenwänden von Tunneln und dergleichen, umfasst wenigstens einen Grundkörper 11 mit wenigstens einem, mit dem Grundkörper 11 verbundenen, Propeller 111; wenigstens eine, über einen Schwenkarm 12 mittels eines ersten Schwenkgelenks 113 schwenkbar mit dem Grundkörper 11 verbundenen, Sprüheinheit 13; wenigstens ein am Grundkörper 11, am Schwenkarm 12 und/oder an der Sprüheinheit 13 angeordnetes Mittel zur Distanzbestimmung 16 bzw. 134; und wenigstens eine Basisstation 3, welche über einen Zufuhrschlauch 2 mit dem Grundkörper 11 verbunden ist. In den Fig. 1 und 2 sind exemplarisch Mittel 16 zur Distanzbestimmung an den Verbindungsstreben zu den Propellern 111 sowie Mittel 134 zur Distanzbestimmung an Mitteln 133 zur Distanzeinstellung der Sprüheinheit 13 gezeigt. Das wenigstens eine Mittel zur Distanzbestimmung 16 bzw. 134 kann insbesondere als ein Laser-Entfernungsmesser, Sonar- und/oder Radarsensor ausgebildet sein. An der Vorrichtung 1, vorzugsweise am Grundkörper 11, am Schwenkarm 12 und/oder an der Sprüheinheit 13, kann zudem auch ein GPS-Einheit 114 zur globalen Positionsbestimmung angeordnet sein, welcher insbesondere mit einem weiteren, an der Basisstation 3 angeordneten, GPS-Einheit 31, Steuerdaten austaucht. Der Schwenkarm 12 kann, wie dargestellt, vorzugsweise mittig am Grundkörper 11 angeordnet sein und sich bezüglich des Grundkörpers 11 nach oben und nach unten schwenken lassen, wobei der Schwenkarm 12 dabei einen Schwenkwinkel α überstreicht. Am Grundkörper 11 kann zur Bewegungssteuerung des Schwenkarms 12 dazu vorzugsweise ein erster Motor 112 angeordnet sein, welcher eingerichtet ist, mit dem Schwenkarm 12 und/oder mit dem ersten Schwenkgelenk 113 zusammenzuwirken.

**Fig. 2** zeigt die Ausgestaltung aus Fig. 1 in einer Draufsicht.

Wie hier zu sehen, kann am Grundkörper 11 vorteilhaft mehr als ein Propeller 111, nämlich insbesondere zwei, vier, sechs oder bevorzugt acht Propeller 111 angeordnet sein, welche vorzugsweise über Verbindungsstreben fest mit dem Grundkörper 11 verbunden sein können. Eine größere Anzahl an, mit dem Grundkörper 11 verbundenen Propellern 111 erhöht vorteilhaft die Tragfähigkeit des Grundkörpers 11, so dass beispielsweise schwereres Zubehör mit der Sprüheinheit 13 der Vorrichtung 1 verbunden werden kann und stabilisiert zudem generell die Flugeigenschaften der Vorrichtung 1.

Die über Verbindungsstreben mit dem Grundkörper 11 verbundenen Propeller 111 können vorzugsweise derart um den Grundkörper 11 herum angeordnet sein, dass dabei eine bezüglich der Ausrichtung des Schwenkarms 12 vergleichsweise schmale Silhouette entsteht. In Fig. 2 sind exemplarisch acht Propeller 111 um den Grundkörper 11 herum angeordnet, wobei jeweils vier davon bezüglich der Schwenkebene des Schwenkarms 12 auf der einen Seite und die anderen vier auf der anderen Seite befestigt sind. Die vier Propeller 111 einer Seite können dabei, wie in der Draufsicht zu sehen, vorzugsweise hintereinander auf einer Linie und bezüglich der Schwenkebene des Schwenkarms 12 vergleichsweise nahe am Grundkörper positioniert sein, so dass die Querausdehnung des Grundkörpers 111 samt Propellern 111, also die Ausdehnung senkrecht zur Schwenkebene des Schwenkarms 12 (definiert u.a. durch den Schwenkwinkel a), vorteilhaft lediglich in einem Bereich von 35 bis 90 cm liegt. Eine derart schmale Bauform erhöht vorteilhaft die Zugänglichkeit von Fassadenaußenecken, Dachgiebeln und dergleichen.

Über den Zufuhrschlauch 2 ist der Grundkörper 11 mit einer Basisstation 3 verbunden und wird durch sie mit flüssigem und/oder gasförmigem Material sowie mit elektrischem Strom versorgt. Die Basisstation 3 am Boden kann dazu insbesondere wenigstens eine Pumpe zum Pumpen von flüssigem Material, wie Wasser, Waschlösungen, Farben, Lacke, Beschichtungs- und/oder Veredelungsmittel, sowie wenigstens eine Pumpe zum Pumpen von gasförmigem Material, insbesondere zur Erzeugung von Druckluft, umfassen. Ein Stromaggregat und/oder eine Batterie kann ebenfalls vorteilhaft Teil der Basisstation 3 sein, so dass der Grundkörper 11, der erste Motor 112, der Schwenkarm 12 und/oder der Sprühaufsatz 13 samt etwaig daran angeordnetes Zubehör mit elektrischem Strom versorgt werden kann. Die Basisstation 3 kann auch wenigstens eine Mischeinrichtung umfassen, wobei die Mischeinrichtung vorzugsweise wenigstens einen Tank zur Aufnahme wenigstens eines Materials, sowie einen Rührer umfasst (hier nicht gezeigt). Eine Mischeinrichtung erlaubt es vorteilhaft, Änderungswünsche, insbesondere spezielle Farbwünsche des Kunden, die sich erst während der Bearbeitung eines Objekts bzw. einer Fassade ergeben, sofort bzw. vor Ort umsetzen zu können.

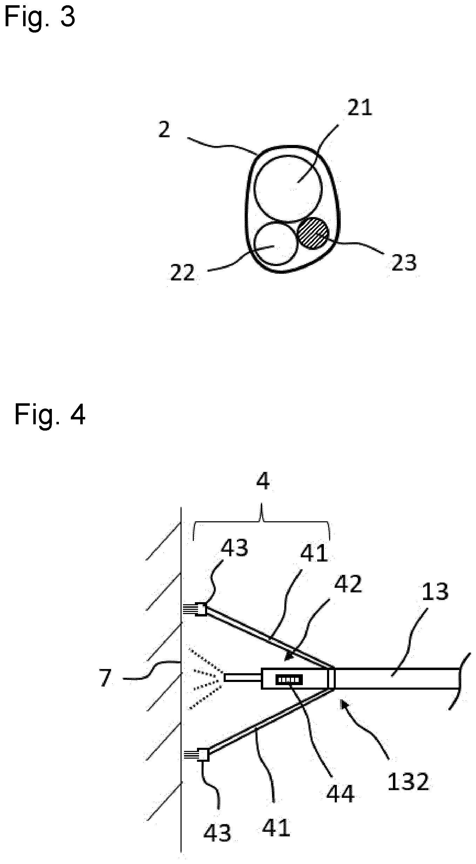

In **Fig. 3** ist einen Querschnitt durch eine Ausgestaltung eines Zufuhrschlauchs 2 dargestellt.

Der Zufuhrschlauch 2 kann vorzugsweise als ein Schlauchverbund ausgestaltet sein, wobei im Inneren einer Umhüllung wenigstens ein erster Materialzufuhrschlauch 21, insbesondere zur Zuführung einer Flüssigkeit, wie beispielswiese Wasser, Lacke und/oder andere flüssige Veredelungsmittel; wenigstens ein zweiter Materialzufuhrschlauch 22, insbesondere zur Zuführung eines Gases, wie beispielsweise Druckluft; und wenigstens ein Kabel 23 zur Stromversorgung des Grundkörpers 11 angeordnet sein können. Der Zufuhrschlauch 2 kann bei einem Flugvorgang des Grundkörpers 11 samt Schwenkarm 12 und Sprüheinheit 13 auch vorteilhaft durch sein Gewicht Zug auf den Grundkörper 11 ausüben und den Grundkörper 11 dadurch in der Luft weiter stabilisieren. Dazu ist der Zufuhrschlauch 2 an der Unterseite des Grundkörpers 11 über ein Anschlussrohr 14 starr mit dem Grundkörper 11 verbunden, wie in Fig. 1 angedeutet. Während der Bearbeitung, also beispielsweise während der Auftragung von Material (Wasser, Lack und/oder andere flüssige Veredelungsmittel), kann der durch den Sprühvorgang auf den Grundkörper 11 wirkende Gegenimpuls dann über das Anschlussrohr 14 und den Zufuhrschlauch 2 vorteilhaft abgeleitet werden und eine unerwünschte, durch den Sprühvorgang selbst ausgelöste, Distanzvergrößerung zur zu bearbeitenden Oberfläche, hier der Gebäudefassade 7, vorteilhaft vermieden werden.

Der Schwenkarm 12 kann vorzugsweise hohl ausgestaltet sein, wobei im Inneren des Schwenkarms 12 wenigstens ein, bevorzugt zwei, Mittel zur Materialleitung verläuft, welches eingerichtet ist, Material aus dem Zufuhrschlauch 2 aufzunehmen und zur Sprüheinheit 13 zu transportieren. Innerhalb des hohl ausgestalteten Schwenkarms 12 kann natürlich auch wenigstens eine weitere Leitung für elektrischen Strom, insbesondere wenigstens ein weiteres Kabel, verlaufen, die den über den Zufuhrschlauch 2 bzw. das darin verlaufende Kabel 23 bereitgestellten elektrischen Strom aus der Basisstation 3 and die Sprüheinheit 13 weiterleitet. Die Sprüheinheit 13 selbst umfasst vorzugsweise wenigstens ein Aufnahmemittel 132 zur reversiblen Aufnahme und Wirkverbindung von Zubehör, insbesondere zur Aufnahme und Wirkverbindung einer Sprühdüse 6, eines Lackieraufsatzes 4 und/oder einer Rotationsbürste 5, und kann bevorzugt wenigstens ein weiteren Propeller 131 umfassen. Fig. 1 illustriert diese Ausstattung exemplarisch, wobei in der hier gezeigten Ausgestaltung, zwei, übereinander positionierte Propeller 131 dargestellt sind, welche über Verbindungsstreben an der gegenüberliegenden Seite einer, über das Aufnahmemittel 132 mit der Sprüheinheit 13 wirkverbundenen, Sprühdüse 6, an der Sprüheinheit 13 angeordnet sind.

Der wenigstens eine Propeller 131, bzw. die hier dargestellten zwei Propeller 131 sind bevorzugt schwenkbar, insbesondere über eine kardanische Aufhängung schwenkbar, mit der Sprüheinheit 13 wirkverbunden, wodurch der bzw. die Propeller 131 vorteilhaft jeweils so gedreht werden können, dass sie einen optimalen Ausgleichsschub zu den durch die Abgabe von Material über die Sprüheinheit 13 erzeugten Kräften erzeugen. Wie in den Fig. 1 und 2 gezeigt, können der oder die Propeller 131 dazu insbesondere von der Sprühdüse 6 der Sprüheinheit 13 weg gerichtet sein. Der oder die Propeller 131 an der Sprüheinheit 13, wie auch der oder die Propeller 111 am Grundkörper, können dabei als Impeller (wie hier gezeigt) und/oder als Doppelpropeller (hier nicht gezeigt) ausgestaltet sein. Ein oder mehrere, zusätzliche Propeller 131 an der Sprüheinheit 13 ermöglichen es vorteilhaft, Kräfte, die auf den Grundkörper 11, den Schwenkarm 12 und/oder die Sprüheinheit 13 einwirken und insbesondere während der Abgabe von Material über die Sprüheinheit 13 entstehen, auszugleichen und dadurch insbesondere während eines Sprühvorgangs einen stabilen Flug des Grundkörpers 11 samt Schwenkarm 12 und Sprüheinheit 13 zu gewährleisten. Darüber hinaus ermöglicht es der oder die, an der Sprüheinheit 13 angeordnete Propeller 131, vorteilhaft auch Kräfte, die durch eine Schwerpunktsverlagerung des Systems aus Grundkörper 11, Schwenkarm 12 und Sprüheinheit 13, während bzw. nach einer Schwenkbewegung des Schwenkarms 12 um einen Schwenkwinkel α auftreten, sowie etwaige Gegenkräfte, welche durch den aus der Sprüheinheit 13 ausgestoßenen Sprühstrahl erzeugt werden, auszugleichen und den Flug zu stabilisieren. Im Zusammenspiel mit dem oder den Mittel(n) 16 zur Distanzbestimmung am Grundkörper 11, bzw. am Schwenkarm 12, mit dem oder den Mittel(n) 134 zur Distanzbestimmung an der Sprüheinheit 13 und/oder im Zusammenspiel mit einem Sensor 44 zur Distanz- und Schichtdickenmessung an einem Lackieraufsatz 4 können dazu insbesondere die Rotationsgeschwindigkeiten der Propeller 111 an Grundkörper 11 und/oder Schwenkarm 12 bzw. der Propeller 131 an der Sprüheinheit 13 individuell geregelt werden, um Position und Abstand der Vorrichtung 1 zu der zu bearbeitenden Oberfläche in Echtzeit zu steuern und dadurch jederzeit qualitativ hochwertige Arbeitsergebnisse zu erzielen.

Die Sprüheinheit 13 kann über wenigstens ein zweites Schwenkgelenk 122 schwenkbar mit dem Schwenkarm 12 verbunden sein und einen Schwenkwinkel β überstreichen. Fig. 2 zeigt darüber hinaus, dass die Sprüheinheit 13 vorzugsweise derart über das zweite Schwenkgelenk 122 mit dem Schwenkarm 12 verbunden ist, dass die Sprüheinheit 13 samt daran ggf. angeordneter Propeller 131 ungehindert von einer Position, bei der das dem Schwenkarm 12 zugewandte Ende der Sprüheinheit 13 oberhalb (zum Himmel hin) der Längsachse des Schwenkarms 12 ist, zu einer Position, bei der das dem Schwenkarm 12 zugewandte Ende der Sprüheinheit 13 unterhalb (zum Boden hin) der Längsachse des Schwenkarms 12 ist, entlang des Schwenkwinkels β verschwenkt werden kann. Der Schwenkarm 12 kann dazu entweder nur einseitig an der Sprüheinheit 13 angelenkt sein oder aber, wie in Fig. 2 gezeigt, insbesondere an dessen der Sprüheinheit 13 zugewandtem Ende gabelförmig ausgestaltet sein, so dass die Sprüheinheit 13 samt Propeller 131 beim Schwenkvorgang ungehindert zwischen den Zinken der Gabel hindurch geschwenkt werden kann. Am Schwenkarm 12 kann dazu vorzugsweise wenigstens ein zweiter Motor 121 angeordnet sein, der eingerichtet ist, die Sprüheinheit 13 gegenüber dem Schwenkarm 12 zu schwenken. Eine über das Aufnahmemittel 132 mit der Sprüheinheit 13 reversibel verbindbare Sprühdüse 6 eignet sich insbesondere zum Aufbringen von Wasser, Waschlösungen und anderen Reinigungsmitteln auf ein Dach bzw. auf eine Fassade, sowohl im Rahmen einer Hoch- wie auch einer Niederdruck-Reinigung.

In den Fig. 1 und 2 ist zudem zu sehen, dass die Sprüheinheit 13 vorteilhaft auch wenigstens ein, oder wie hier gezeigt zwei, Mittel 133 zur Distanzeinstellung bezüglich der Gebäudefassade 7, Glasfassade, des Daches, der Innenwand eines Tunnels und dergleichen umfassen kann, wobei das oder die Mittel 133 zur Distanzeinstellung vorzugsweise ein Mittel 134 zur Distanzbestimmung und/oder wenigstens ein Gleitelement 135 zur Wechselwirkung mit der Gebäudefassade 7, Glasfassade, dem Dach, der Innenwand eines Tunnels und dergleichen umfassen können. Die beiden hier exemplarisch dargestellten Mittel 133 zur Distanzeinstellung sind als aus- und einfahrbare Teleskoparme ausgestaltet, welche schwenkbar an der Sprüheinheit 13 angeordnet sind. In ausgefahrenem Zustand erstrecken sie sich vorzugsweise beidseitig der Sprühdüse 6, so dass eine besonders stabile Stützung während des Sprühvorgangs gewährleistet ist. Das Mittel 133 zur Distanzeinstellung, insbesondere die Teleskoparme, können automatisch, insbesondere mit Hilfe eines Motors, beispielsweise eines Spindelhubmotors, in ihrer Länge verstellt werden und ermöglichen vorteilhaft die mechanische Distanzeinstellung und Kontrolle zwischen der Sprüheinheit 13 und der zu bearbeitenden Oberfläche, resp. Gebäudefassade 7. Das bzw. wie hier gezeigt, die Gleitelemente 135 können vorzugsweise durch, am, dem der Sprüheinheit 13 gegenüberliegenden, Ende des jeweiligen Mittels 133 zur Distanzeinstellung angeordnet sein. Als Gleitelement 135 eignen sich insbesondere Rollen und/oder Walzen mit 360°-Drehmöglichkeit, welche an der zu bearbeitenden Oberfläche entlang gleiten und/oder rollen können und dadurch vorteilhaft einen beschädigungsfreien Kontakt zwischen dem jeweiligen Mittel 133 zur Distanzeinstellung und der zu bearbeitenden Oberfläche, auch während einer Bewegung der Vorrichtung 1 entlang besagter Oberfläche, gewährleisten.

Die erfindungsgemäße Vorrichtung 1 lässt sich jedoch auch vorteilhaft für andere Arbeiten einsetzen, in dem die Sprüheinheit 13 mit anderem Zubehör bestückt wird. Zu Lackierungs, Beschichtungs- bzw. Veredelungszwecken, kann die erfindungsgemäße Vorrichtung 1, bzw. deren Sprüheinheit 13, insbesondere mit einem Lackieraufsatz 4 als Zubehör bestückt werden.

In **Fig. 4** ist eine erste Ausgestaltung eines Lackieraufsatzes 4 bei Verwendung in einer Schnitt-Seitenansicht gezeigt.

Der Lackieraufsatz 4 umfasst vorzugsweise wenigstens eine Lackierdüse 42, welche eingerichtet ist, fluides Material aus dem Zufuhrschlauch 2 aufzunehmen und in Form eines Stahls und/oder eines Nebels zu versprühen. Zudem kann der Lackieraufsatz 4 wenigstens einen Trichter 41 umfassen, welcher die Lackierdüse 42 umhüllt und über seine große Trichteröffnung den von der Lackierdüse 41 erzeugten Strahl und/oder Nebel freigibt. In Fig. 4 ist der von der Lackierdüse 41 erzeugte Strahl und/oder Nebel durch gestrichelte Linien angedeutet. Darüber hinaus umfasst der Lackieraufsatz 4 vorzugsweise wenigstens eine Luftdüse 43, welche am Rand der großen Trichteröffnung angeordnet ist und dazu eingerichtet ist, gasförmiges Material, insbesondere Druckluft, aus dem Zufuhrschlauch 2 aufzunehmen und nach außen abzugeben. Fig. 4 zeigt nur einen Schnitt durch einen exemplarisch dargestellten Trichter 41. Der tatsächliche Trichter 41 umhüllt die Lackierdüse 42 vorzugsweise vollständig, so dass ein erzeugter Sprühstrahl nur noch über die große Trichteröffnung an der, der Lackierdüse 42 gegenüberliegenden Seite austreten kann, wodurch der Sprühstrahl bzw. Nebel bereits etwas fokussiert werden kann. In großen Höhen und/oder bei Seitenwind, kann ein Sprühstrahl jedoch sehr leicht vom eigentlichen Zielpunkt abgelenkt werden, was wiederum die Qualität der Lackierung, Beschichtung und/oder Veredelung nachteilig beeinflussen kann. Um den Windeinfluss auf den Sprühstrahl zu minimieren, kann am Rand des Trichters 41 allerdings, wie bereits kurz beschrieben, wenigstens eine Luftdüse 43 angeordnet sein, welche insbesondere Druckluft entlang des Randes des Trichters 41 ausbläst, so dass sich eine Art äußere Luftvorhang bildet, die eine Farbverwehung durch Seitenwinde vorteilhaft verhindern kann. Eine derartige Luftvorhang ist in Fig. 4 - wieder als Schnitt - durch jeweils drei kurze, nahe beieinander liegende Striche zwischen Gebäudefassade 7 und Luftdüse 43 bzw. Rand des Trichters 41 angedeutet. Darüber hinaus kann der Lackieraufsatz 4 auch einen Sensor 44 zur Distanz- und Schichtdickenmessung umfassen, welcher die aktuelle Position insbesondere der Sprüheinte 13 zur bearbeiteten Oberfläche aber auch die aktuelle Bearbeitungsqualität vorteilhaft in Echtzeit überprüft und diese Ergebnisse auch an die Basisstation 3 übermittelt. Eine Korrektur der Betriebsweise der Vorrichtung 1, beispielsweise eine Abstandsänderung und/oder Winkeländerung der Sprüheinheit 13 bezüglich der Gebäudefassade 7, eine Änderung der Materialzusammensetzung, eine Änderung des über die Luftdüse 43 ausgestoßenen Luftstroms, etc., kann dann vorteilhaft entweder automatisch oder durch einen Benutzer am Boden vorgenommen werden.

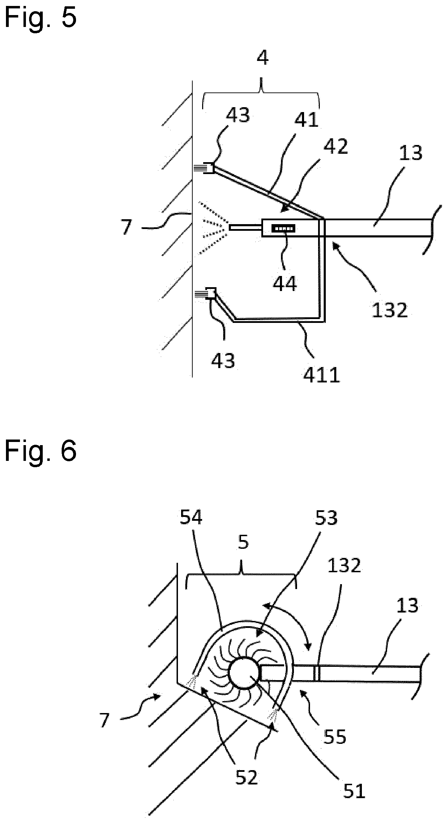

**Fig.** 5 zeigt eine zweite Ausgestaltung eines Lackieraufsatzes 4 mit einer Auffangeinrichtung 411 zum Aufsammeln von überschüssigem Lack in einer Schnitt-Seitenansicht. Die Auffangeinrichtung 411 zum Aufsammeln von überschüssigem Lack ermöglicht einerseits vorteilhaft die Wiederverwendung des gesammelten Materials, wobei die Auffangeinrichtung 411 vorzugsweise derart mit der Sprüheinheit 13 wirkverbunden sein kann, so dass besagtes aufgefangenes Material wieder in den Sprühprozess zurückgeführt werden kann. Andererseits verhindert die Auffangeinrichtung 411 vorteilhaft die Verschmutzung von, in Bezug auf die aktuelle Arbeitsposition weiter unten, also zum Boden hin, liegenden Regionen der Gebäudefassade 7 bzw. des Bodens selbst. Wie in Fig. 5 gezeigt, kann die Auffangeinrichtung 411 kann dazu insbesondere als eine Vertiefung, speziell als eine wannenförmige Vertiefung und/oder eine rillenförmige Vertiefung, im Trichter 41 des Lackieraufsatz 4 ausgebildet sein. Zur Erhöhung der Reinigungswirkung kann alternativ über das Aufnahmemittel 132 auch eine Rotationsbürste 5 mit der Sprüheinheit 13 wirkverbunden werden.

**Fig.** 6 zeigt eine Ausgestaltung einer Rotationsbürste 5 bei Verwendung in einer Schnitt-Seitenansicht

Die Rotationsbürste 5 kann vorzugsweise einen Bürstenkopf 53 umfassen, der mittels eines an der Rotationsbürste 5 angeordneten Motors 51, vorzugsweise eines Elektromotors, welcher beispielsweise über das Kabel 23 des Zufuhrschlauchs 2 mit Strom versorgt wird, in Drehung versetzt werden kann. Die Rotationsbürste 5 kann ferner wenigstens eine Hochdruckdüse 52 umfassen, welche Wasser und/oder Wasch- bzw. Reinigungsflüssigkeit entweder direkt auf die Fassade 7 bzw. das Dach oder aber zunächst auf den Bürstenkopf 53 aufbringen kann. Die wenigstens eine oder bevorzugt mehrere Hochdrückdüsen 52 können dazu über eine Verrohrung 54 mittelbar oder unmittelbar mit den Materialzufuhrschläuchen 21 und/oder 22 des Zufuhrschlauches 2 in Wirkverbindung stehen. Die stabile und präzise Handhabbarkeit der erfindungsgemäßen Vorrichtung 1 erlaubt vorteilhaft, besagte Rotationsbürste 5 in direkten Kontakt mit dem zu reinigenden Objekt, insbesondere mit der Gebäudefassade 7 oder dem Dach, zu bringen und diese dann nicht nur durch Behandlung mit einem Sprühstrahl, sondern auch durch eine mechanische Einwirkung des Bürstenkopfes 53 auf das jeweilige Objekt zu reinigen. Um die Variabilität der Rotationsbürste 5 als Zubehör der Sprüheinheit 13 weiter zu erhöhen, kann, wie in Fig. 6 durch den gebogenen Doppelpfeil and der Verrohrung 54 angedeutet, an der Rotationsbürste 5 darüber hinaus ein Mittel 55 zur Winkeleinstellung angeordnet sein, welches eingerichtet ist, die Verrohrung 54 bezüglich der Längsachse der Sprüheinheit 13 zu verdrehen bzw. zu verschieben und dadurch den Sprühwinkel der Hochdruckdüsen 52 bezüglich der Längsachse der Sprüheinheit 13 zu verstellen. Das Mittel 55 zur Winkeleinstellung kann dazu vorzugsweise Sprühwinkel bezüglich der Längsachse der Sprüheinheit von ± 90° ermöglichen, wobei ein Sprühwinkel von -90° eine von der Längsachse der Sprüheinheit 13 senkrecht nach unten (zum Boden hin) gerichtete Sprührichtung, ein Sprühwinkel von +90° eine von der Längsachse der Sprüheinheit 13 senkrecht nach oben (zum Himmel hin) gerichtete Sprührichtung und ein Sprühwinkel von 0° eine Sprührichtung parallel zur Längsachse der Sprüheinheit 13 und von der Vorrichtung 1 hin zur Gebäudefassade 7 beschreibt. Dadurch kann, wie in Fig. 6 zu sehen, auch der Sprühwinkel der Hochdruckdüsen 52 bezüglich der jeweils zu bearbeitenden Oberfläche verändert werden, so dass sich eine derartige Ausgestaltung der Rotationsbürste 5 insbesondere für eine Reinigung von Fassadenvorsprüngen eignet (wie gezeigt), aber auch vorteilhaft bei der Reinigung von Sonnenkollektoren, Photovoltaikanlagen und ähnlichen, an Dächern angeordneten Einrichtungen, Verwendung finden kann.

Nach Verwendung der Vorrichtung 1 können schließlich zur Landung des Grundkörpers 11 ein oder mehrere Füße 15 am Grundkörper angeordnet sein, welche vorzugsweise automatisch aus- und einklappbar ausgestaltet sein können und dem Grundkörper 11 samt Schwenkarm 12 und Sprüheinheit 13 einen sicheren Stand bieten (vgl. dazu die Fig. 1 und 2).

Die vorliegende Erfindung betrifft eine Propeller-unterstützte Vorrichtung 1 für die Reinigung, Beschichtung, Versiegelung und/oder Lackierung von Gebäudefassaden, Glasfassaden, Dächern, Innenwänden von Tunneln und dergleichen, wenigstens umfassend: einen Grundkörper 11 mit wenigstens einem, mit dem Grundkörper 11 verbundenen, Propeller 111; wenigstens eine, über einen Schwenkarm 12 mittels eines ersten Schwenkgelenks 113 schwenkbar mit dem Grundkörper 11 verbundenen, Sprüheinheit 13; wenigstens ein am Grundkörper 11, am Schwenkarm 12 und/oder an der Sprüheinheit 13 angeordnetes Mittel zur Distanzbestimmung 16 bzw. 134 und wenigstens eine Basisstation 3, welche über einen Zufuhrschlauch 2 mit dem Grundkörper 11 verbunden ist. Sie ermöglicht es vorteilhaft exponierte, verwinkelte und allgemein unzugängliche Stellen an Fassaden, Dächern und dergleichen für eine Bearbeitung zu erreichen und gewährleistet qualitativ hochwertige, reproduzierbare Arbeitsergebnisse. Die erfindungsgemäße Vorrichtung 1 spart dabei vorteilhaft Arbeitszeit und Kosten ein und erhöht zudem die Arbeitssicherheit, da auf Arbeiten durch Menschen in größeren Höhen verzichtet werden kann.

### Bezugszeichenliste

- 1: Propeller-unterstützte Vorrichtung
- 11: Grundkörper
111 Propeller des Grundkörpers (11)
112 erster Motor
113 erstes Schwenkgelenk für Schwenkarm (12)
114 GPS-Einheit
- 12: Schwenkarm
121 zweiter Motor
122 zweites Schwenkgelenk für Sprüheinheit (13)
- 13: Sprüheinheit
131 Propeller der Sprüheinheit (13)
132 Aufnahmemittel für Zubehör
133 Mittel zur Distanzeinstellung
134 Mittel zur Distanzbestimmung
135 Gleitelement
- 14: Anschlussrohr
- 15: Fuß
- 16: Mittel zur Distanzbestimmung

- 2: Zufuhrschlauch
- 21: erster Materialzufuhrschlauch, insbesondere Wasserzufuhrschlauch, Zufuhrschlauch für Lacke und andere Veredelungsmittel
- 22: zweiter Materialzufuhrschlauch, insbesondere Zufuhrschlauch für Druckluft
- 23: Kabel
- 3: Basisstation
- 31: GPS-Einheit

- 4: Lackieraufsatz
- 41: Trichter
- 411: Auffangeinrichtung
- 42: Lackierdüse
- 43: Luftdüse
- 44: Sensor

- 5: Rotationsbürste
- 51: Motor
- 52: Hochdruckdüse
- 53: Bürstenkopf
- 54: Verrohrung
- 55: Mittel zur Winkeleinstellung

- 6: Sprühdüse, insbesondere Wassersprühdüse

- 7: Gebäudefassade

- α: Schwenkwinkel des Schwenkarms (12)
- β: Schwenkwinkel der Sprüheinheit (13)

## Patentansprüche

1. Propeller-unterstützte Vorrichtung (1) für die Reinigung, Beschichtung, Versiegelung und/oder Lackierung von Gebäudefassaden (7), Glasfassaden, Dächern, Innenwänden von Tunneln und dergleichen, wenigstens umfassend:
- einen Grundkörper (11) mit wenigstens einem, mit dem Grundkörper (11) verbundenen, Propeller (111);
- wenigstens eine, über einen Schwenkarm (12) mittels eines ersten Schwenkgelenks (113) schwenkbar mit dem Grundkörper (11) verbundene, Sprüheinheit (13);
- wenigstens ein am Grundkörper (11), am Schwenkarm (12) und/oder an der Sprüheinheit (13) angeordnetes Mittel (16; 134) zur Distanzbestimmung; und
- wenigstens eine Basisstation (3), welche über einen Zufuhrschlauch (2) mit dem Grundkörper (11) verbunden ist.

2. Vorrichtung (1) nach Anspruch 1, **dadurch gekennzeichnet, dass** an der Sprüheinheit (13) wenigstens ein weiterer Propeller (131) angeordnet ist, wobei der Propeller (131) bevorzugt schwenkbar an der Sprüheinheit (13) angeordnet ist.

3. Vorrichtung (1) nach Anspruch 1 oder 2, **dadurch gekennzeichnet, dass** die Propeller (111; 131) als Impeller und/oder Doppelpropeller ausgestaltet sind.

4. Vorrichtung (1) nach einem der Ansprüche 1 bis 3, **dadurch gekennzeichnet, dass** die Sprüheinheit (13) über wenigstens ein zweites Schwenkgelenk (122) schwenkbar mit dem Schwenkarm (12) verbunden ist.

5. Vorrichtung (1) nach einem oder mehreren der vorherigen Ansprüche, **dadurch gekennzeichnet, dass** die Sprüheinheit (13) wenigstens ein Mittel (133) zur Distanzeinstellung bezüglich der Gebäudefassade (7), Glasfassade, des Daches, der Innenwand eines Tunnels und dergleichen umfasst,
- wobei das Mittel (133) zur Distanzeinstellung vorzugsweise ein Mittel (134) zur Distanzbestimmung und/oder wenigstens ein Gleitelement (135) zur Wechselwirkung mit der Gebäudefassade (7), Glasfassade, dem Dach, der Innenwand eines Tunnels und dergleichen umfasst.

6. Vorrichtung (1) nach einem oder mehreren der vorherigen Ansprüche, **dadurch gekennzeichnet, dass** am Schwenkarm (12) wenigstens ein zweiter Motor (121) angeordnet ist, der eingerichtet ist, die Sprüheinheit (13) gegenüber dem Schwenkarm (12) zu schwenken.

7. Vorrichtung (1) nach einem oder mehreren der vorherigen Ansprüche, **dadurch gekennzeichnet, dass** der Zufuhrschlauch (2) als ein Schlauchverbund ausgestaltet ist, wobei im Inneren einer Umhüllung
- wenigstens ein erster Materialzufuhrschlauch (21), insbesondere zur Zuführung einer Flüssigkeit, wie beispielswiese Wasser, Lacke und/oder andere flüssige Veredelungsmittel;
- wenigstens ein zweiter Materialzufuhrschlauch (22), insbesondere zur Zuführung eines Gases, wie beispielsweise Druckluft; und
- wenigstens ein Kabel (23) zur Stromversorgung des Grundkörpers (11)
angeordnet sind.

8. Vorrichtung (1) nach einem oder mehreren der vorherigen Ansprüche, **dadurch gekennzeichnet, dass** der Schwenkarm (12) hohl ausgestaltet ist, wobei im Inneren des Schwenkarms (12) wenigstens ein, bevorzugt zwei, Mittel zur Materialleitung verläuft, welches eingerichtet ist, Material aus dem Zufuhrschlauch (2) aufzunehmen und zur Sprüheinheit (13) zu transportieren.

9. Vorrichtung (1) nach einem oder mehreren der vorherigen Ansprüche, **dadurch gekennzeichnet, dass** die Sprüheinheit (13) wenigstens ein Aufnahmemittel (132) zur reversiblen Aufnahme und Wirkverbindung von Zubehör, insbesondere zur Aufnahme und Wirkverbindung einer Sprühdüse (6), eines Lackieraufsatzes (4) und/oder einer Rotationsbürste (5), umfasst.

10. Vorrichtung (1) nach Anspruch 9, **dadurch gekennzeichnet, dass** der Lackieraufsatz (4) wenigstens umfasst:
- wenigstens eine Lackierdüse (42), welche eingerichtet ist, fluides Material aus dem Zufuhrschlauch (2) aufzunehmen und in Form eines Stahls und/oder eines Nebels zu versprühen;
- wenigstens einen Trichter (41), welcher die Lackierdüse (42) umhüllt und über seine große Trichteröffnung den von der Lackierdüse (41) erzeugten Strahl und/oder Nebel freigibt; und
- wenigstens eine Luftdüse (43), welche am Rand der großen Trichteröffnung angeordnet ist und dazu eingerichtet ist, gasförmiges Material, insbesondere Druckluft, aus dem Zufuhrschlauch (2) aufzunehmen und nach außen abzugeben.

11. Vorrichtung (1) nach Anspruch 10, **dadurch gekennzeichnet, dass** der Lackieraufsatz (4) ferner
- einen Sensor (44) zur Distanz- und Schichtdickenmessung und/oder
- eine Auffangeinrichtung (411) zum Aufsammeln von überschüssigem Lack umfasst.

12. Vorrichtung (1) nach einem oder mehreren der vorherigen Ansprüche, **dadurch gekennzeichnet, dass** am Grundkörper (11) zwei, vier, sechs oder bevorzugt acht Propeller (111) angeordnet sind.

13. Vorrichtung (1) nach einem oder mehreren der vorherigen Ansprüche, **dadurch gekennzeichnet, dass** die Basisstation (3) wenigstens eine Mischeinrichtung umfasst, wobei die Mischeinrichtung vorzugsweise wenigstens einen Tank zur Aufnahme wenigstens eines Materials, sowie einen Rührer umfasst.
